# EUROPEAN PATENT SPECIFICATION

(11) **EP 2 040 484 B1**
(45) Date of publication and mention of the grant of the patent: **07.11.2018**
(21) Application number: 08164049.2
(22) Date of filing: 10.09.2008
(51) Int. Cl.: H04R 1/40, H04R 1/26, H04R 1/28

(54) **Speaker device of mobile communication terminal**
Lautsprechervorrichtung eines Mobilkommunikationsendgeräts
Dispositif de haut-parleur pour terminal de communication mobile

(30) Priority: 21.09.2007 KR 20070096808
(43) Date of publication of application: 25.03.2009
(73) Proprietor: Samsung Electronics Co., Ltd., Suwon-si, Gyeonggi-do, 443-742 (KR)
(72) Inventor: Park, Dong-Ik, Samsung Electronics Co., Ltd, Gyeonggi-do (KR); Kwon, Soon-Youl, Samsung Electronics Co., Ltd, Gyeonggi-do (KR)
(74) Representative: HGF Limited

(56) References cited:
- EP-A2- 1 221 823
- EP-A2- 1 773 094
- WO-A1-2007/060730
- US-A- 6 075 868
- US-A1- 2005 129 258

## Description

### BACKGROUND OF THE INVENTION

### 1. Field of the Invention

The present invention relates to a mobile communication terminal, and in particular to a speaker device adapted to be capable of providing high quality sound.

### 2. Description of the Related Art

Typically, a mobile communication terminal is provided with a space for mounting a speaker device, which is limited in size due to the limitation of the size of such a mobile communication terminal. Therefore, the improvement of sound quality and clearness can be expected depending on how to use the space.

Nowadays, in order to provide a speaker device suitable for DMB (Digital Multimedia Broadcasting), a separate speaker unit is additionally provided, beyond a speaker unit for outputting a receiving sound and bell sound. In order to allow a user to enjoy the DMB, what is needed is high quality audio performance for outputting a sound resembling the original sound.

In the past, attempts had been made for improving sound volume and quality by fixing a speaker and securing a resonant space for sealing. With this measure, an increase in sound pressure and partially in bass can be expected. However, it is still required to further improve sound quality, clearness, and THD (Total Harmonic Distortion). In order to solve this problem, a method for improving a bass region by implementing a speaker device employing a diaphragm structure has been developed.

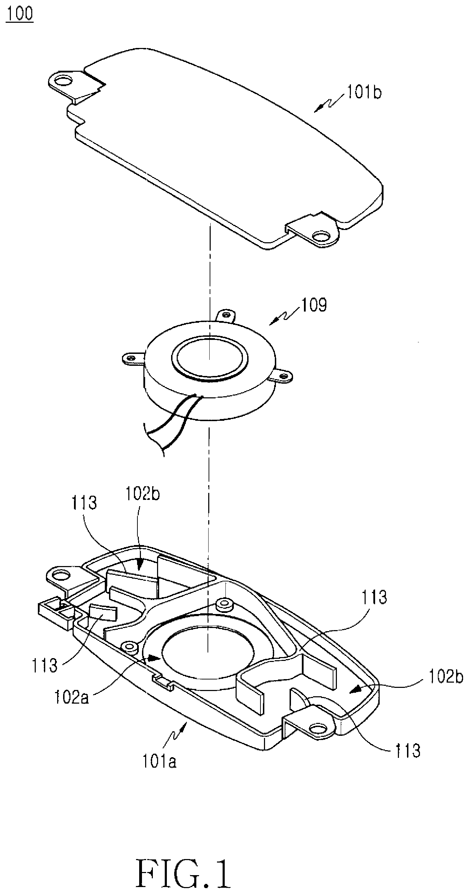

FIG. 1 illustrates an example of a speaker device 100 of a mobile communication device, which employs a conventional diaphragm structure, wherein the speaker device 100 includes a speaker housing having a sub-housing 101a and a cover 101b. The speaker housing is provided with a mounting space 102a for mounting a speaker unit 109, and a resonant space 102b connected to the mounting space 102a.

One side of the sub-housing 101a is opened, and a plurality of diaphragms 113 of various shapes is formed inside the sub-housing 101a. The diaphragms 113 serve to divide the internal space of the sub-housing 101a. Such a speaker device employing the above-mentioned diaphragm structure should be improved in terms of THD which is a principal cause deteriorating high quality audio performance.

Like this, with the existing constructions of speaker devices, there are limitations in providing a sound resembling an original sound when enjoying DMB or the like. In addition, because users typically enjoy DMB in a state in which the volume is increased, speaker devices should be improved in terms of sound characteristics, even in the state in which the volume is increased. Furthermore, it is required to develop a speaker device capable of improving clearness and THD while complementing areas vulnerable in bass reproducing characteristics

Various techniques are described in EP 1773094, EP 1221823, US 2005/129258, WO 2007/060730 and US 6075868. In particular, EP1773094 discloses a speaker device, for a mobile communication terminal, for outputting a sound, comprising a first speaker unit and a housing having an internal space divided by diaphragms formed inside the internal space into a mounting space for mounting the first speaker unit and a resonant space, wherein the housing further includes a sound passage formed by the diaphragms, wherein the speaker device further comprises an amplifier outputting a first audio signal, wherein the first speaker unit is connected to an output terminal of the amplifier, the first speaker unit outputting a first sound from the first audio signal.

### SUMMARY OF THE INVENTION

Accordingly, the present invention has been made to solve the above-mentioned problems occurring in the prior art, and the present invention provides a speaker device adapted to be capable of providing high quality sound performance, even though it is installed within a mobile communication terminal.

In addition, the present invention is intended to provide a speaker device of a mobile communication device adapted capable of improving THD (Total Harmonic Distortion) so that a sound resembling an original sound can be provided while a user is enjoying DMB (Digital Multimedia Broadcasting).

According to an aspect of the present invention, there is provided a speaker device, for a mobile communication terminal, for outputting a sound, comprising: a first speaker unit; a second speaker unit; and a housing having an internal space divided by diaphragms formed inside the internal space into a mounting space for mounting the first speaker unit and a resonant space, wherein the housing further includes a sound passage formed by the diaphragms, and wherein the second speaker unit is mounted at a distal end portion of the sound passage, wherein the speaker device further comprises: an amplifier comprising an input terminal to which a first input audio signal is inputted, and outputting a first audio signal, wherein the first speaker unit is connected to an output terminal of the amplifier, the first speaker unit outputting a first sound from the first audio signal, wherein the mounting space and the sound passage are arranged such that a rear side sound of the first speaker unit moves along the sound passage and arrives at the distal end portion of the sound passage where the second speaker unit is mounted, wherein the second speaker unit is connected to the input terminal of the amplifier, and wherein the second speaker unit outputs a second sound from the first input audio signal such that the rear side sound outputted from the rear side of the first speaker unit arriving at the distal end portion of the sound passage is dampened by the second sound outputted by the second speaker unit.

### BRIEF DESCRIPTION OF THE DRAWINGS

The above and other objects, features and advantages of the present invention will be more apparent from the following detailed description taken in conjunction with the accompanying drawings, in which:
FIG. 1 is an exploded perspective view showing a speaker device for a mobile communication terminal, which employs a conventional diaphragm structure;
FIG. 2 is an exploded perspective view showing a speaker device for a mobile communication terminal, which is provided with an additional speaker unit according to an embodiment of the present invention;
FIG. 3 is a schematic diagram showing the construction of a mobile communication terminal provided with the speaker device of FIG. 2;
FIG. 4 is a schematic diagram showing the construction of a speaker device for a stereo mobile communication terminal according to an example; and
FIG. 5 is a schematic diagram showing the construction of a speaker device for a stereo mobile communication terminal according to another example.

### DETAILED DESCRIPTION OF THE EXEMPLARY EMBODIMENTS

Hereinafter, exemplary embodiments of the present invention will be described with reference to the accompanying drawings. In the following description of the present invention, a detailed description of known functions and configurations incorporated herein will be omitted for clarity and conciseness.

The present invention provides a speaker device employing a diaphragm structure for providing a high quality sound characteristic. Especially, the present invention additionally mounts a separate speaker unit in such a speaker device employing a diaphragm structure, so as to improve a resonator characteristic occurring on the rear side of an original speaker unit. As such, the sound produced from the rear side of the original speaker unit and arriving at a distal end portion of a resonator is dampened by the sound provided through the additional speaker unit, whereby the characteristics, such as clearness and THD (Total Harmonic Distortion), can be improved.

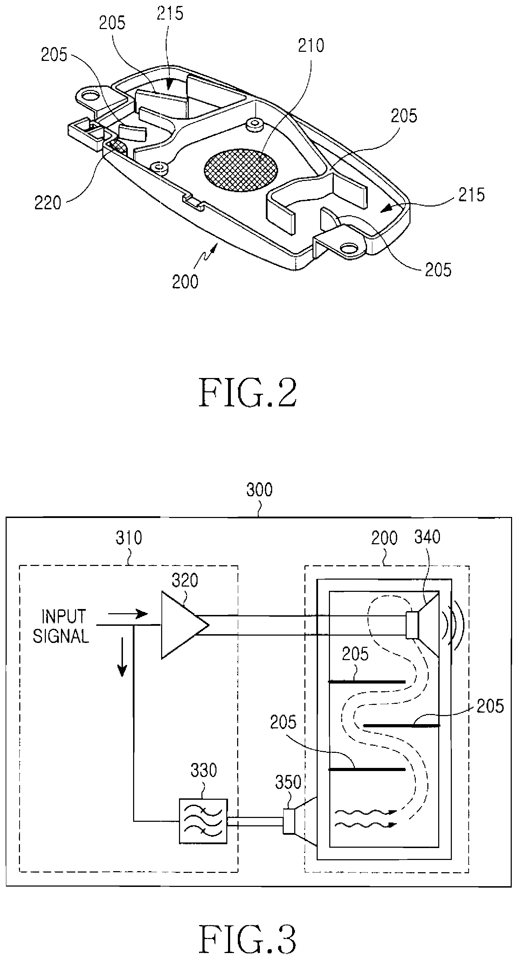

Now, a speaker device of a mobile communication device, which is provided with an additional speaker unit according to an embodiment of the present invention will be described with reference to FIG. 2.

FIG. 2 illustrates an example of a sub-housing 200 when a speaker device is disassembled, wherein the sub-housing 200 has an internal space divided by diaphragms 205. A resonant space 215 is formed by the diaphragms 205, wherein the resonant space 215 is defined as a space exclusive of the spaces for mounting the speaker units. In other words, the internal space, which is divided by the diaphragms formed inside the speaker device, is provided with a resonant space outside the first speaker unit mounting space. The sub-housing 200 with the resonant space 215 is coupled with a cover (not shown), thereby being closed.

According to the present invention, a second speaker unit is additionally provided so as to improve characteristics, such as THD or the like due to the rear side sound of the first speaker unit. Referring to the positions for mounting the first and second speaker units, the first speaker unit is mounted in the space designated by reference numeral 210, and the second speaker unit is mounted in the space designated by reference numeral 220. At this time, the second speaker unit is preferably mounted at a distal end portion of a sound passage between the diaphragms 205 so as to dampen the rear side sound of the first speaker unit arriving at the distal end portion of the sound passage.

Meanwhile, when configuring a resonant space in a speaker device of a mobile communication terminal, resonant frequency is determined by the volume of the speaker device and the length of a sound passage. That is, the resonant frequency of a speaker device is inversely proportional to the volume of the internal space of the speaker device and the length of the sound passage, and proportional to the cross-sectional area of the sound passage. However, because the speaker device is limited in size and the internal space of the speaker housing is also limited, it is required to design the sound passage so as to improve the sound characteristics in the fixed resonant space. The design is made in such a manner that the cross-sectional area of the sound passage in the resonant space in the speaker housing is reduced while increasing the length of the sound passage. By designing the sound passage in this manner, it is possible to secure a resonant space with resonant diaphragms without using a separate resonance box, and by using such a diaphragm structure, it is advantageous in stressing the bass region of a sound outputted from the speaker device.

In general, if a speaker device for a specific frequency band is mounted in the sub-housing 200 without a diaphragm, it is difficult for the speaker device to properly implement a sound beyond the specific frequency band. For example, if the first speaker unit is for the 1 kHz band, its resonant frequency is increased more than 1 to 1.2 kHz. If so, the speaker device cannot properly implement the sound of bass region. In such a case, in order to complement bass below 1 kHz for the first speaker unit, the length of the sound passage is set to the length corresponding to λ /2 at 34 cm which is the 1 kHz frequency wavelength, i.e. to the length corresponding to 17 cm. Like this, in the inventive speaker device, it is preferable to set the length of the sound passage to correspond to a half of the resonant frequency wavelength of the speaker unit. By forming the resonant space 215 with such a sound passage length, the influence transmitted to the rear side of the first speaker unit will be reduced.

Now, the present invention will be described with reference to FIG. 3 showing the construction of a mobile communication terminal with the speaker device shown in FIG. 2.

FIG. 3 illustrates the schematic construction of a mobile communication terminal 300, in particular constituents, such as a voice processing unit 310, a sub-housing 200, etc.

The voice processing unit 310 includes an amplifier 320 and a filter 330, wherein the amplifier 320 amplifies and transmits an audio signal inputted thereto to a first speaker unit 340. The first speaker unit 340 is connected with the output terminal of the amplifier 320, and serves to output an audio signal inputted from the amplifier 320 to the outside.

An audio signal identical to the audio signal inputted to the amplifier 320 is transmitted to a second speaker unit 350. A filter 330 may be additionally provided between the input terminal of the amplifier 320 and the input terminal of the filter 330 so that a user uses a desired frequency band. As a result, the signal identical to the audio signal inputted to the amplifier 320 is filtered through the filter 330 and transmitted to the second speaker unit 350. Here, if the second speaker unit 350 is a full range speaker unit, the filter 330 passes only a signal waveform corresponding to a frequency band desired by the user, and transmits the signal waveform to the second unit 350. For the filter 330 executing such a function, a low pass filter (LPF), a high pass filter (HPF), and a band pass filter (BPF) may be employed.

Similarly, the second speaker unit 350 may be connected with the input terminal of the amplifier 320 either directly or through the filter 330. If the audio signal identical to the audio signal inputted to the amplifier 320 is inputted to the second speaker unit 350, the second speaker unit 350 outputs the audio signal inputted thereto toward a space where the first speaker unit 340 is mounted so as to dampen an audio signal produced at the rear side of the first speaker unit to with the audio signal outputted from the second speaker unit 350. The second speaker unit 350 is positioned at a distal end portion of a sound passage formed by diaphragms 205 with reference to the first speaker unit mounting space among the internal spaces divided by the diaphragms 205 formed inside the speaker device 200.

Meanwhile, the first speaker unit 340 is used for outputting a sound produced due to DMB (Digital Multimedia Broadcasting), and the second speaker unit 350 is used for improving the outputting characteristics of the first speaker unit 340 rather than for outputting a sound. Especially, the magnitude of a signal outputted through the second speaker unit 350 should be substantially equal to that of a signal of the rear side sound of the first speaker unit 340 so as to dampen the rear side sound with the signal outputted through the second speaker unit 350. Like this, a sound is also outputted from the rear side of the first speaker unit beyond from the front side of the first speaker unit. Assuming that the front side sound and the rear side sound are outputted in a ratio of 9:1, 8:1, or the like in magnitude, the magnitude of a signal outputted from the second speaker unit 350 becomes substantially equal to that of a signal from the rear side of the first speaker unit 340 because the signal outputted from the second speaker unit 350 does not pass through the amplifier 320.

Now, the operating process of the second speaker unit 350 will be described in detail.

If an input signal is simultaneously transmitted to both the amplifier 320 and the filter 330, each of the first speaker unit 340 and the second speaker unit 350 outputs a signal. At this time, the sound produced from the rear side of the first speaker unit 340 moves along the sound passage formed by the diaphragms 205 and arrives at the end portion of the sound passage, wherein the sound is dampened by the sound produced from the second speaker unit 350 mounted at the distal end portion of the sound passage. That is, the rear side sound of the first speaker unit 340 meets the front side sound of the second speaker unit 350, and is dampened by the front side sound of the second speaker unit 350. In this manner, the rear side sound of the first speaker unit 340 can be inaudible, and the front side sound of the first speaker unit 340 can be heard without being hindered by the rear side sound.

In addition, according to the present invention, if a separate speaker is additionally used as described above in all the cases where the diaphragms are used, it is possible to process sound existing around the speaker used for outputting sound.

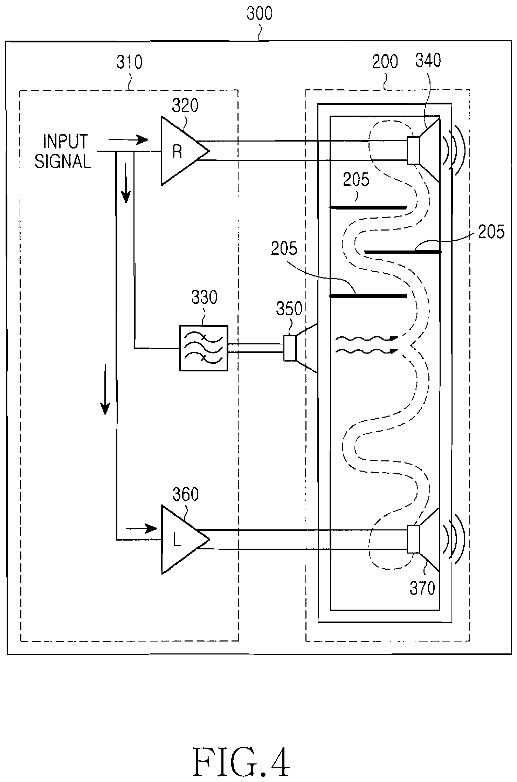

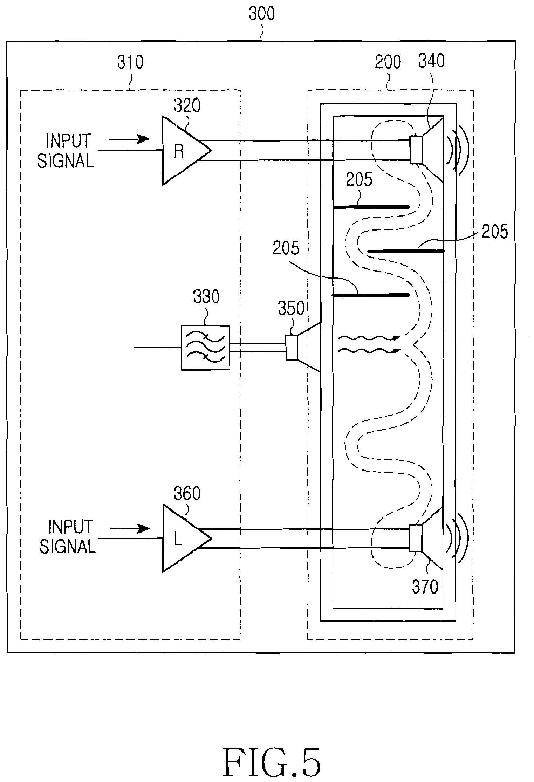

Meanwhile, the measure of dampening noise by additionally mounting a separate speaker as described above can be applied to a stereophonic mobile communication terminal. FIG. 4 illustrates a stereophonic mobile communication terminal equipped with an additional speaker. A stereophonic mobile communication terminal is equipped with two speakers corresponding to left and right sides, respectively. In FIG. 4, if the speaker unit corresponding to the right side is a first speaker unit 340, and the speaker unit outputting a signal inputted through the amplifier 360 is a third speaker unit 370, it is possible to dampen the sounds produced from the first speaker unit 340 and the third speaker unit 370 by mounting a second speaker unit 350. Unlike that shown in FIG. 4, the speaker device can be implemented as shown in FIG. 5, so that input signals are transmitted to the amplifier 320, the filter 330, and the amplifier 360, respectively for the first, second and third speaker units 340, 350 and 370.

In order to observe how much THD (Total Harmonic Distortion) is improved when the inventive additional speaker unit is employed, reference is made to Table 1 and Table 2 below. Table 1 and Table 2 comparatively show the performance of a speaker device provided in a conventional communication terminal and the characteristic of the inventive speaker device.

**Table 1**

| THD | Conventional | Present invention | Improved rate |
|---|---|---|---|
| 800 Hz | 14.44% | 12.59% | 12.81% up |
| 1kHz | 10.78% | 9.41% | 12.7% up |
| 5kHz | 0.10% | 0.10% | - |

Table 1 shows the improved ratio in total harmonic distortion characteristic in the case of low gain. As comparatively shown in Table 1, it can be found that the sound from the inventive speaker device is improved 12% or more in total harmonic distortion characteristic as compared to the conventional speaker device.

**Table 2**

| THD | Conventional | Present invention | Improved rate |
|---|---|---|---|
| 800 Hz | 18.37% | 15.80% | 14% up |
| 1kHz | 13.97% | 11.89% | 14.9% up |
| 5kHz | 0.10% | 0.10% | - |

Table 2 shows the improved ratio in total harmonic distortion characteristic in the case of high gain.

From Table 1 and Table 2, it can be found that the improved rate in the high gain is higher than that in the low gain. This means that, with volume tuned higher, the user can hear more improved sound. Considering that users typically watch DMB (Digital Multimedia Broadcasting) with increased volume, it is concluded that this improves the sound quality more effectively.

According to the present invention, when enjoying a multimedia file, watching DMB, or the like, a sound resembling an original sound can be implemented through a speaker device by improving sound pressure output. In addition, according to the present invention, sound characteristics can be improved merely by adding one speaker unit so as to improve the resonant characteristic caused by a sound emanating from the rear side of a speaker. In particular, a high-quality plentiful sound can be provided.

While the invention has been shown and described with reference to certain preferred embodiments thereof, it will be understood by those skilled in the art that various changes in form and details may be made therein without departing from the scope of the invention as defined by the appended claims.

## Claims

1. A speaker device (100), for a mobile communication terminal, for outputting a sound, comprising:
a first speaker unit (340);
a second speaker unit (350); and
a housing (200) having an internal space divided by diaphragms (205) formed inside the internal space (210) into a mounting space for mounting the first speaker unit (340) and a resonant space (215), wherein the housing (200) further includes a sound passage formed by the diaphragms (205), and wherein the second speaker unit (350) is mounted at a distal end portion (220) of the sound passage,
wherein the speaker device further comprises:
an amplifier (320) comprising an input terminal to which a first input audio signal is inputted, and outputting a first audio signal,
wherein the first speaker unit (340) is connected to an output terminal of the amplifier (320), the first speaker unit (340) outputting a first sound from the first audio signal,
wherein the mounting space (210) and the sound passage are arranged such that a rear side sound of the first speaker unit (340) moves along the sound passage and arrives at the distal end portion (220) of the sound passage where the second speaker unit (350) is mounted, wherein the second speaker unit (350) is connected to the input terminal of the amplifier (320), and
wherein the second speaker unit outputs a second sound from the first input audio signal such that the rear side sound outputted from the rear side of the first speaker unit (340) arriving at the distal end portion of the sound passage is dampened by the second sound outputted by the second speaker unit (350).

2. The speaker device as claimed in claim 1, further comprising a filter (330) connected between the input terminal of the amplifier (320) and an input terminal of the second speaker unit (350), wherein the filter (330) is configured to filter the first input audio signal and to transmit the filtered first input audio signal to the second speaker unit (350).

3. The speaker device as claimed in claim 2, wherein the filter (350) is at least one of a low pass filter, a high pass filter, and a band pass filter.

4. The speaker device as claimed in one of claims 1 to 3, wherein the resonant space (215) is outside of and connected to the mounting space.

5. The speaker device as claimed in claim 1, further comprising a cover coupled to the housing (200).

## Patentansprüche

1. Lautsprechervorrichtung (100) für ein Mobilkommunikationsendgerät zum Ausgeben eines Tons, aufweisend: eine erste Lautsprechereinheit (340); eine zweite Lautsprechereinheit (350); und
ein Gehäuse (200) mit einem Innenraum, der durch Membranen (205), die in dem Innenraum (210) ausgebildet sind, in einen Montageraum zum Anbringen der ersten Lautsprechereinheit (340) und einen Resonanzraum (215) geteilt wird, wobei das Gehäuse (200) ferner einen Schalldurchgang enthält, der durch die Membranen (205) ausgebildet wird, und wobei die zweite Lautsprechereinheit (350) an einem distalen Endabschnitt (220) des Schalldurchgangs angebracht ist,
wobei die Lautsprechervorrichtung ferner aufweist:
einen Verstärker (320), aufweisend eine Eingangsklemme, an die ein erstes Eingangsaudiosignal eingegeben wird, und Ausgeben eines ersten Audiosignals,
wobei die erste Lautsprechereinheit (340) mit einer Ausgangsklemme des Verstärkers (320) verbunden ist, wobei die erste Lautsprechereinheit (340) einen ersten Ton des ersten Audiosignals ausgibt,
wobei der Montageraum (210) und der Schalldurchgang so angeordnet sind, dass ein rückwärtiger Ton der ersten Lautsprechereinheit (340) sich entlang des Schalldurchgangs bewegt und an dem distalen Endabschnitt (220) des Schalldurchgangs ankommt, an dem die zweite Lautsprechereinheit (350) angebracht ist, wobei die zweite Lautsprechereinheit (350) mit der Eingangsklemme des Verstärkers (320) verbunden ist; und
wobei die zweite Lautsprechereinheit einen zweiten Ton aus dem ersten Eingangsaudiosignal so ausgibt, dass der von der rückwärtigen Seite der ersten Lautsprechereinheit (340) ausgegebene rückwärtige Ton, der an dem distalen Endabschnitt des Schalldurchgangs ankommt, durch den zweiten Ton gedämpft wird, der von der zweiten Lautsprechereinheit (350) ausgegeben wird.

2. Lautsprechervorrichtung nach Anspruch 1, ferner aufweisend einen Filter (330), der zwischen der Eingangsklemme des Verstärkers (320) und einer Eingangsklemme der zweiten Lautsprechereinheit (350) angeschlossen ist, wobei der Filter (330) konfiguriert ist, um das erste Eingangsaudiosignal zu filtern und das gefilterte erste Eingangsaudiosignal zu der zweiten Lautsprechereinheit (350) zu übertragen.

3. Lautsprechervorrichtung nach Anspruch 2, wobei der Filter (350) mindestens einer von einem Tiefpassfilter, einem Hochpassfilter und einem Bandpassfilter ist.

4. Lautsprechervorrichtung nach einem der Ansprüche 1 bis 3, wobei der Resonanzraum (215) außerhalb des Montageraums liegt und mit diesem verbunden ist.

5. Lautsprechervorrichtung nach Anspruch 1, ferner aufweisend eine Abdeckung, die an das Gehäuse (200) gekoppelt ist.

## Revendications

1. Dispositif de haut-parleur (100), pour un terminal de communication mobile, destiné à émettre un son, comprenant : une première unité de haut-parleur (340) ; une deuxième unité de haut-parleur (350) ; et
un boîtier (200) possédant un espace interne divisé par des diaphragmes (205) formés à l'intérieur de l'espace interne (210) dans un espace de montage destiné à monter la première unité de haut-parleur (340) et un espace de résonance (215), dans lequel le boîtier (200) inclut en outre un passage de son formé par les diaphragmes (205), et dans lequel la deuxième unité de haut-parleur (350) est montée au niveau d'une partie d'extrémité distale (220) du passage de son,
dans lequel le dispositif de haut-parleur comprend en outre :
un amplificateur (320) comprenant un terminal d'entrée auquel un premier signal audio d'entrée est entré, et émettant un premier signal audio,
dans lequel la première unité de haut-parleur (340) est connectée à un terminal de sortie de l'amplificateur (320), la première unité de haut-parleur (340) émettant un premier son à partir du premier signal audio,
dans lequel l'espace de montage (210) et le passage de son sont agencés de sorte qu'un son de côté arrière de la première unité de haut-parleur (340) se déplace le long du passage de son et arrive au niveau de la partie d'extrémité distale (220) du passage de son où la deuxième unité de haut-parleur (350) est montée, dans lequel la deuxième unité de haut-parleur (350) est connectée au terminal d'entrée de l'amplificateur (320), et
dans lequel la deuxième unité de haut-parleur émet un deuxième son à partir du premier signal audio d'entrée, de sorte que le son de côté arrière émis depuis le côté arrière de la première unité de haut-parleur (340) arrivant au niveau de la partie d'extrémité distale du passage de son soit atténué par le deuxième son émis par la deuxième unité de haut-parleur (350).

2. Dispositif de haut-parleur selon la revendication 1, comprenant en outre un filtre (330) connecté entre le terminal d'entrée de l'amplificateur (320) et un terminal d'entrée de la deuxième unité de haut-parleur (350), dans lequel le filtre (330) est configuré pour filtrer le premier signal audio d'entrée et pour transmettre le premier signal audio d'entrée filtré à la deuxième unité de haut-parleur (350).

3. Dispositif de haut-parleur selon la revendication 2, dans lequel le filtre (350) est au moins l'un d'un filtre passe-bas, un filtre passe-haut et un filtre passe-bande.

4. Dispositif de haut-parleur selon l'une quelconque des revendications 1 à 3, dans lequel l'espace de résonance (215) se trouve à l'extérieur de et connecté à l'espace de montage.

5. Dispositif de haut-parleur selon la revendication 1, comprenant en outre un capot couplé au boîtier (200).
